# EUROPEAN PATENT APPLICATION

(11) **EP 3 477 107 A1**
(43) Date of publication of application: **01.05.2019**
(21) Application number: 17819617.6
(22) Date of filing: 20.04.2017
(51) Int. Cl.: F04B 27/18

(54) **CONTROL VALVE FOR VARIABLE-CAPACITY COMPRESSOR, AND ASSEMBLY METHOD FOR SAME**

(30) Priority: 28.06.2016 JP 2016127883
(71) Applicant: Fujikoki Corporation, Tokyo 158-0082 (JP)
(72) Inventor: KUME, Yoshiyuki, Tokyo 158-0082 (JP); ASANO, Hisashi, Tokyo 158-0082 (JP); OHKUMA, Masaki, Tokyo 158-0082 (JP); ITOH, Masaharu, Tokyo 158-0082 (JP)
(74) Representative: Ter Meer Steinmeister & Partner
(86) International application number: PCT/JP2017/015836
(87) International publication number: WO 2018/003250

(57) **Abstract**

Provided are a variable-capacity compressor control valve with a reduced number of component machining steps, a reduced machining cost, a reduced number of components, and a reduced number of assembly steps as well as reduced sizes of components, and with a simple configuration that can adjust the bellows attachment length and can secure airtightness, and a method for assembling such a control valve. A closure member (65), which is adapted to close an upper-portion opening (33a) of a cylindrical stator (33) on the side opposite to an attractor (32), is press-fitted into the upper-portion opening (33a) and welded therein.

## Description

### Technical Field

The present invention relates to a variable-capacity compressor control valve for use in an automotive air conditioner or the like, and a method for assembling the same.

### Background Art

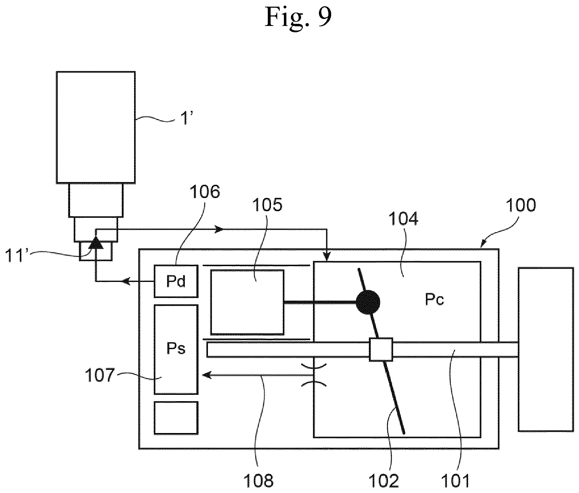

Conventionally, a variable-capacity swash plate compressor such as the one schematically shown in Fig. 9 has been used as a compressor for an automotive air conditioner. The variable-capacity swash plate compressor 100 includes a rotating shaft 101 that is rotationally driven by an on-vehicle engine, a swash plate 102 that is attached to the rotating shaft 101, a crank chamber 104 in which the swash plate 102 is disposed, a piston 105 that is reciprocated by the swash plate 102, a discharge chamber 106 for discharging refrigerant compressed by the piston 105, a suction chamber 107 for sucking refrigerant, an in-compressor release passage (i.e., a fixed orifice) 108 for releasing the pressure Pc in the crank chamber 104 to the suction chamber 107, and the like.

Meanwhile, a control valve 1' used for the aforementioned variable-capacity compressor receives the discharge pressure Pd from the discharge chamber 106 of the compressor 100 and is configured to control the pressure Pc in the crank chamber 104 by controlling the discharge pressure Pd in accordance with the suction pressure Ps of the compressor 100. Such a control valve 1' has, as the basic configuration, a valve body that includes a valve chamber with a valve orifice, a Ps introduction port communicating with the suction chamber 107 of the compressor 100, a Pd introduction port arranged upstream of the valve orifice and communicating with the discharge chamber 106 of the compressor 100, and a Pc outlet port arranged downstream of the valve orifice and communicating with the crank chamber 104 of the compressor 100; a valve element (i.e., a valve stem) for opening or closing the valve orifice; an electromagnetic actuator with a plunger for moving the valve element in the direction to open or close the valve orifice (i.e., in the vertical direction); a pressure-sensitive chamber that receives the suction pressure Ps from the compressor 100 via the Ps introduction port; and a pressure-sensitive reaction member that urges the valve element in the direction to open or close the valve orifice in accordance with the pressure in the pressure-sensitive chamber. The valve element and the valve orifice form a valve unit indicated by reference numeral 11' in Fig. 9 (for example, see Patent Literature 1 below).

In the control valve 1' with such a configuration, when current is flowed through a solenoid portion including a coil, a stator, an attractor, and the like of the electromagnetic actuator, the plunger is attracted by the attractor, and along with this, the valve element is moved in the direction to close the valve such that it follows the plunger by the urging force of a valve-closing spring. Meanwhile, the suction pressure Ps introduced from the compressor 100 via the Ps introduction port is introduced into the pressure-sensitive chamber through an inlet/outlet chamber via a gap formed between the plunger and a guide pipe arranged around the outer periphery of the plunger or the like. Then, the pressure-sensitive reaction member (e.g., a bellows device) is expansively or contractively displaced in accordance with the pressure (i.e., the suction pressure Ps) in the pressure-sensitive chamber (i.e., contracts if the suction pressure Ps is high, and expands if it is low), and the displacement (i.e., urging force) is then transmitted to the valve element, whereby the valve element portion of the valve element moves up or down with respect to the valve orifice to regulate the valve opening of the valve unit 11'. That is, the valve opening is determined by the force of attracting the plunger with the solenoid portion, urging force (i.e., expansion or contraction force) that acts with the expansive or contractive displacement of the pressure-sensitive reaction member, and the urging force of a plunger spring (i.e., a valve-opening spring) and the valve-closing spring. The pressure Pc in the crank chamber 104 (hereinafter also referred to as "crank chamber pressure Pc" or simply referred to as "pressure Pc") is controlled in accordance with the valve opening.

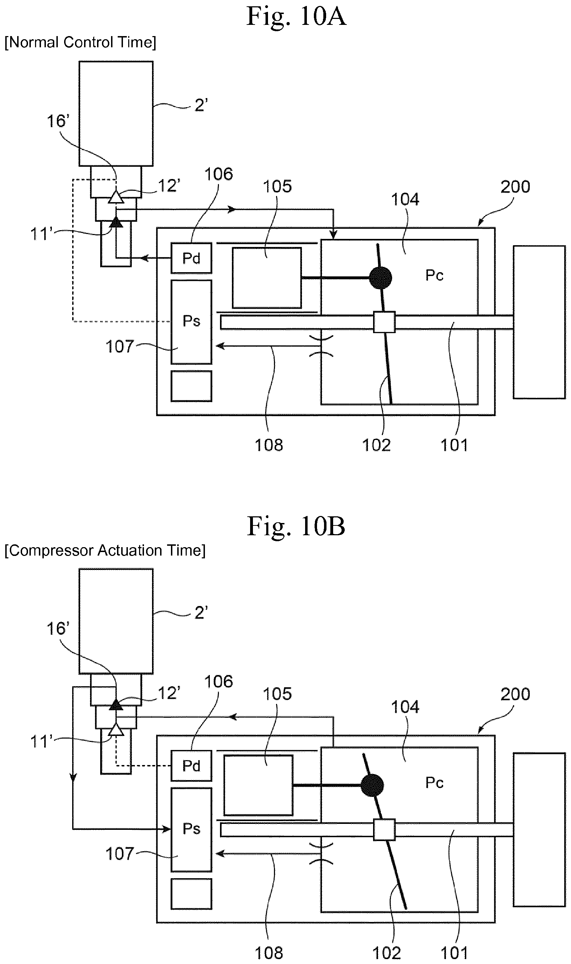

In response to the aforementioned variable-capacity compressor, an improved variable-capacity swash plate compressor, such as the one schematically shown in Figs. 10A and 10B, for example, has already been proposed that is intended to reduce the time required to increase the discharge capacity at the compressor actuation time, and suppress or reduce a decrease in the operation efficiency of the compressor at the normal control time.

A control valve 2' used for such an improved variable-capacity swash plate compressor 200 has a valve element (i.e., a valve stem) including a main valve element and a sub valve element, and has an in-valve release passage 16' in the main valve element. The control valve 2' basically has a valve body that includes a valve chamber with a valve orifice, a Ps inlet/outlet port communicating with a suction chamber 107 of the compressor 200, a Pd introduction port arranged upstream of the valve orifice and communicating with a discharge chamber 106 of the compressor 200, and a Pc inlet/outlet port arranged downstream of the valve orifice and communicating with a crank chamber 104 of the compressor 200; a main valve element for opening or closing the valve orifice; an electromagnetic actuator with a plunger for moving the main valve element in the direction to open or close the valve orifice; a pressure-sensitive chamber that receives the suction pressure Ps from the compressor 200 via the Ps inlet/outlet port; and a pressure-sensitive reaction member that urges the main valve element in the direction to open or close the valve orifice in accordance with the pressure in the pressure-sensitive chamber. Further, the in-valve release passage 16' for releasing the pressure Pc in the crank chamber 104 to the suction chamber 107 of the compressor 200 via the Ps inlet/outlet port is provided in the main valve element, and the sub valve element for opening or closing the in-valve release passage 16' is also provided so that when the plunger is continuously moved upward from the lowest position by the attraction force of the electromagnetic actuator, the sub valve element moves upward together with the plunger while closing the in-valve release passage 16', and the main valve element is also moved upward so as to follow the sub valve element. Then, after the valve orifice is closed by the main valve element, if the plunger is further moved upward, the sub valve element is configured to open the in-valve release passage 16'. The main valve element and the valve orifice form a main valve unit indicated by reference numeral 11' in Figs. 10A and 10B, while the sub valve element and the in-valve release passage form a sub valve unit indicated by reference numeral 12' (for example, see Patent Literature 2 below).

At the normal control time (Pd → Pc control time) of the control valve 2' with such a configuration, when current is flowed through a solenoid portion including a coil, a stator, an attractor, and the like of the electromagnetic actuator, the plunger is attracted by the attractor, and along with this, the sub valve element moves upward integrally with the plunger, and following the movement of the sub valve element, the main valve element is moved in the direction to close the valve by the urging force of a valve-closing spring. Meanwhile, the suction pressure Ps introduced from the compressor 200 via the Ps inlet/outlet port is introduced into the pressure-sensitive chamber through an inlet/outlet chamber via a horizontal hole in the plunger or the like, and the pressure-sensitive reaction member (e.g., a bellows device) is expansively or contractively displaced in accordance with the pressure (i.e., the suction pressure Ps) in the pressure-sensitive chamber (i.e., contracts if the suction pressure Ps is high, and expands if it is low), and the displacement (i.e., urging force) is then transmitted to the main valve element, whereby the main valve element portion of the main valve element moves up or down with respect to the valve orifice to regulate the valve opening of the main valve unit 11'. That is, the valve opening is determined by the force of attracting the plunger with the solenoid portion, urging force (i.e., expansion or contraction force) that acts with the expansive or contractive displacement of the pressure-sensitive reaction member, the urging force of a plunger spring (i.e., a valve-opening spring) and the valve-closing spring, and force that acts on the main valve element in the valve opening direction and in the valve closing direction. The pressure Pc in the crank chamber 104 is controlled in accordance with the valve opening. In such a case, the main valve element is always urged upward by the urging force of the valve-closing spring, while the sub valve element is always urged downward by the urging force of the valve-opening spring. Thus, the sub valve unit 12' is closed and the in-valve release passage 16' is blocked in the main valve element. Therefore, there is no possibility that the crank chamber pressure Pc may be released to the suction chamber 107 via the in-valve release passage 16'.

In contrast, at the compressor actuation time, current is flowed through the solenoid portion so that the plunger is attracted by the attractor and the sub valve element moves upward together with the plunger. Following the upward movement of the sub valve element, the main valve element is moved in the direction to close the valve by the urging force of the valve-closing spring, and after the valve orifice is closed by the main valve element portion of the main valve element, the plunger is further moved upward, whereby the sub valve element opens the in-valve release passage 16'. Then, the crank chamber pressure Pc is released to the suction chamber 107 via two passages that are an in-compressor release passage 108 and the in-valve release passage 16' (for details, see Patent Literature 2 below and the like).

### Citation List

### Patent Literature

Patent Literature 1: JP 2010-185285 A
Patent Literature 2: JP 2013-130126 A

### Summary of Invention

### Technical Problem

By the way, in each of the aforementioned variety of conventional variable-capacity compressor control valves, an adjustment screw with a hexagon socket is screwed onto the upper portion (i.e., a portion on the side opposite to the attractor) of the stator forming the electromagnetic actuator, and the pressure-sensitive chamber that receives the suction pressure Ps in the compressor is formed between the adjustment screw and the attractor on the inner peripheral side of the stator. In addition, the bellows device that includes bellows and the like is arranged as the pressure-sensitive reaction member in the pressure-sensitive chamber, and further, a compression coil spring, which is adapted to urge the bellows device in the direction to contract the bellows device (i.e., in the compressing direction toward the adjustment screw), is provided in a compressed state between the bellows device and the attractor. Further, an O-ring, which is a sealing member for sealing a gap between the stator and the adjustment screw, is mounted in an attachment groove formed on the outer periphery (i.e., a portion below a screw portion) of the adjustment screw.

Typically, in such a conventional variable-capacity compressor control valve, the adjustment screw with the O-ring mounted thereon, the bellows device, and the compression coil spring are arranged on the inner peripheral side of the stator through an opening in the lower portion of the stator, and the attractor is securely attached to the opening in the lower portion of the stator, and then, the bellows attachment length of the bellows device (hereinafter also simply referred to as an "attachment length") is adjusted with the adjustment screw from the top side (i.e., the outer side) of the stator. After that, the adjustment screw is fixed to the upper portion of the stator using an adhesive.

However, such a conventional variable-capacity compressor control valve has the following problems.

That is, due to the thread cutting conducted on the adjustment screw, the machining for forming the groove, and the like, the number of steps of machining the components as well the machining cost is increased, and the sizes of the components are also increased. In addition, since the O-ring should be disposed on the outer periphery of the adjustment screw to secure airtightness, the number of components is increased. Further, since the adjustment screw should be rotated from the outer side of the stator after the adjustment screw and the like are arranged on the inner peripheral side of the stator through the opening in the lower portion of the stator, the assembly steps become complex. Furthermore, since the bellows attachment length is adjusted with the adjustment screw (or the feed rate thereof), the bellows attachment length is difficult to adjust elaborately. Moreover, since the operation of applying an adhesive and curing it takes a long time, the number of assembly steps (and time) is increased.

The present invention has been made in view of the foregoing, and it is an object of the present invention to provide a variable-capacity compressor control valve with a reduced number of component machining steps, a reduced machining cost, a reduced number of components, and a reduced number of assembly steps as well as reduced sizes of components, and with a simple configuration that can adjust the bellows attachment length and can secure airtightness, and a method for assembling such a control valve.

### Solution to Problem

In order to achieve the aforementioned object, a variable-capacity compressor control valve in accordance with the present invention basically includes a valve body including a valve chamber with a valve orifice, a Ps inlet/outlet port communicating with a suction chamber of a compressor, a Pd introduction port arranged upstream of the valve orifice and communicating with a discharge chamber of the compressor, and a Pc inlet/outlet port arranged downstream of the valve orifice and communicating with a crank chamber of the compressor; a valve element adapted to open or close the valve orifice; an electromagnetic actuator including a plunger and adapted to move the valve element in the direction to open or close the valve orifice; a pressure-sensitive chamber adapted to receive a suction pressure Ps from the compressor via the Ps inlet/outlet port; and a pressure-sensitive reaction member arranged in the pressure-sensitive chamber and adapted to urge the valve element in the direction to open or close the valve orifice in accordance with a pressure in the pressure-sensitive chamber. The electromagnetic actuator includes a cylindrical stator, an attractor, and the plunger arranged in series on the inner peripheral side of the coil. A closure member adapted to close an opening of the stator on the side opposite to the attractor is press-fitted into the opening and welded therein so as to form the pressure-sensitive chamber on the inner peripheral side of the stator.

In a preferred aspect, the closure member is press-fitted into the opening in the contracting and expanding direction of the pressure-sensitive reaction member.

In another preferred aspect, the stator and the attractor are integrally molded.

In further another preferred aspect, the diameter of the opening is equal to or greater than that of the pressure-sensitive chamber.

In still another preferred aspect, the closure member has a recess portion in which an end portion of the pressure-sensitive reaction member arranged in the pressure-sensitive chamber is fitted.

The valve element preferably includes a main valve element and a sub valve element, the main valve element being adapted to open or close the valve orifice and including an in-valve release passage for releasing a pressure Pc in the crank chamber to the suction chamber of the compressor via the Ps inlet/outlet port, and the sub valve element being adapted to open or close the in-valve release passage.

An aspect of a method for assembling a variable-capacity compressor control valve in accordance with the present invention is a method for assembling a variable-capacity compressor control valve, the variable-capacity compressor control valve including a valve body including a valve chamber with a valve orifice, a Ps inlet/outlet port communicating with a suction chamber of a compressor, a Pd introduction port arranged upstream of the valve orifice and communicating with a discharge chamber of the compressor, and a Pc inlet/outlet port arranged downstream of the valve orifice and communicating with a crank chamber of the compressor; a valve element adapted to open or close the valve orifice; an electromagnetic actuator including a plunger and adapted to move the valve element in the direction to open or close the valve orifice; a pressure-sensitive chamber adapted to receive a suction pressure Ps from the compressor via the Ps inlet/outlet port; and a pressure-sensitive reaction member arranged in the pressure-sensitive chamber and adapted to urge the valve element in the direction to open or close the valve orifice in accordance with a pressure in the pressure-sensitive chamber, in which the electromagnetic actuator includes a cylindrical stator, an attractor, and the plunger arranged in series on the inner peripheral side of the coil, and the pressure-sensitive chamber in which the pressure-sensitive reaction member is arranged is formed on the inner peripheral side of the stator, the method including arranging the pressure-sensitive reaction member on the inner peripheral side of the stator through an opening of the stator on the side opposite to the attractor; adjusting the attachment length of the pressure-sensitive reaction member while press-fitting a closure member adapted to close the opening into the opening; and welding the closure member in the opening and thus fixing the closure member.

Another aspect of a method for assembling a variable-capacity compressor control valve in accordance with the present invention is a method for assembling a variable-capacity compressor control valve, the variable-capacity compressor control valve including a valve body including a valve chamber with a valve orifice, a Ps inlet/outlet port communicating with a suction chamber of a compressor, a Pd introduction port arranged upstream of the valve orifice and communicating with a discharge chamber of the compressor, and a Pc inlet/outlet port arranged downstream of the valve orifice and communicating with a crank chamber of the compressor; a valve element adapted to open or close the valve orifice; an electromagnetic actuator including a plunger and adapted to move the valve element in the direction to open or close the valve orifice; a pressure-sensitive chamber adapted to receive a suction pressure Ps from the compressor via the Ps inlet/outlet port; and a pressure-sensitive reaction member arranged in the pressure-sensitive chamber and adapted to urge the valve element in the direction to open or close the valve orifice in accordance with a pressure in the pressure-sensitive chamber, in which the electromagnetic actuator includes a cylindrical stator, an attractor, and the plunger arranged in series on the inner peripheral side of the coil, and the pressure-sensitive chamber in which the pressure-sensitive reaction member is arranged is formed on the inner peripheral side of the stator, the method including arranging the pressure-sensitive reaction member on the inner peripheral side of the stator through a lower-portion opening of the stator on the side of the attractor; securely fixing the attractor in the lower-portion opening; adjusting an attachment length of the pressure-sensitive reaction member while press-fitting a closure member adapted to close an upper-portion opening of the stator on the side opposite to the attractor into the upper-portion opening; and welding the closure member in the upper-portion opening and thus fixing the closure member.

### Advantageous Effects of Invention

According to the present invention, since a closure member, which is adapted to close an opening of a cylindrical stator on the side opposite to an attractor, is press-fitted into the opening and welded therein, the attachment length of the pressure-sensitive reaction member can be adjusted in accordance with the amount of press-fit (i.e., the amount of insertion) of the closure member into the opening. In addition, as the closure member is welded in the opening, the closure member can be fixed in the opening airtightly. Therefore, the component machining steps, the machining cost, the number of components, and the number of assembly steps can be reduced, and the sizes of the components can be reduced, and also, the attachment length of the pressure-sensitive reaction member can be adjusted and airtightness can be secured.

### Brief Description of Drawings

Fig. 1 is a longitudinal sectional view showing the first embodiment of the variable-capacity compressor control valve in accordance with the present invention in which the main valve element is in the open position and the sub valve element is in the closed position (i.e., at the normal control time).
Fig. 2 is a longitudinal sectional view showing the first embodiment of the variable-capacity compressor control valve in accordance with the present invention in which the main valve element is in the closed position and the sub valve element is in the closed position (i.e., at the time of transition to compressor actuation).
Fig. 3 is a longitudinal sectional view showing the first embodiment of the variable-capacity compressor control valve in accordance with the present invention in which the main valve element is in the closed position and the sub valve element is in the open position (i.e., at the compressor actuation time).
Fig. 4A is a front view of a plunger used for the variable-capacity compressor control valve in accordance with the present invention.
Fig. 4B is a left-side view of the plunger used for the variable-capacity compressor control valve in accordance with the present invention.
Fig. 4C is a bottom view of the plunger used for the variable-capacity compressor control valve in accordance with the present invention.
Fig. 4D is a sectional view in the direction of the arrow X-X in Fig. 4A.
Fig. 4E is a sectional view in the direction of the arrow Y-Y in Fig. 4B.
Fig. 5 is a longitudinal sectional view showing the second embodiment of the variable-capacity compressor control valve in accordance with the present invention in which the main valve element is in the open position and the sub valve element is in the closed position (i.e., at the normal control time).
Fig. 6 is a longitudinal sectional view showing the second embodiment of the variable-capacity compressor control valve in accordance with the present invention in which the main valve element is in the closed position and the sub valve element is in the closed position (i.e., at the time of transition to compressor actuation).
Fig. 7 is a longitudinal sectional view showing the second embodiment of the variable-capacity compressor control valve in accordance with the present invention in which the main valve element is in the closed position and the sub valve element is in the open position (i.e., at the compressor actuation time).
Fig. 8 is an enlarged longitudinal sectional view of the main portion of an example other than the first and second embodiments of the variable-capacity compressor control valve in accordance with the present invention.
Fig. 9 is a view showing the circulation state of a refrigerant pressure between a compressor and a control valve of the first conventional art.
Fig. 10A is a view showing the circulation state of a refrigerant pressure between a compressor and a control valve of the second conventional art, and showing the normal control time.
Fig. 10B is a view showing the circulation state of a refrigerant pressure between a compressor and a control valve of the second conventional art, and showing the compressor actuation time.

### Description of Embodiments

Hereinafter, embodiments of the present invention will be described with reference to the drawings.

### <First Embodiment>

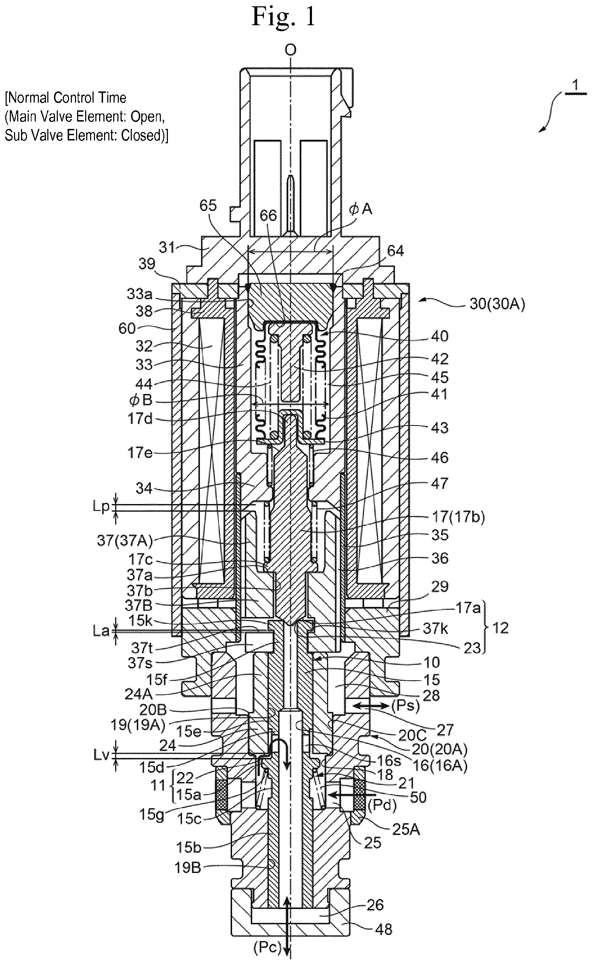

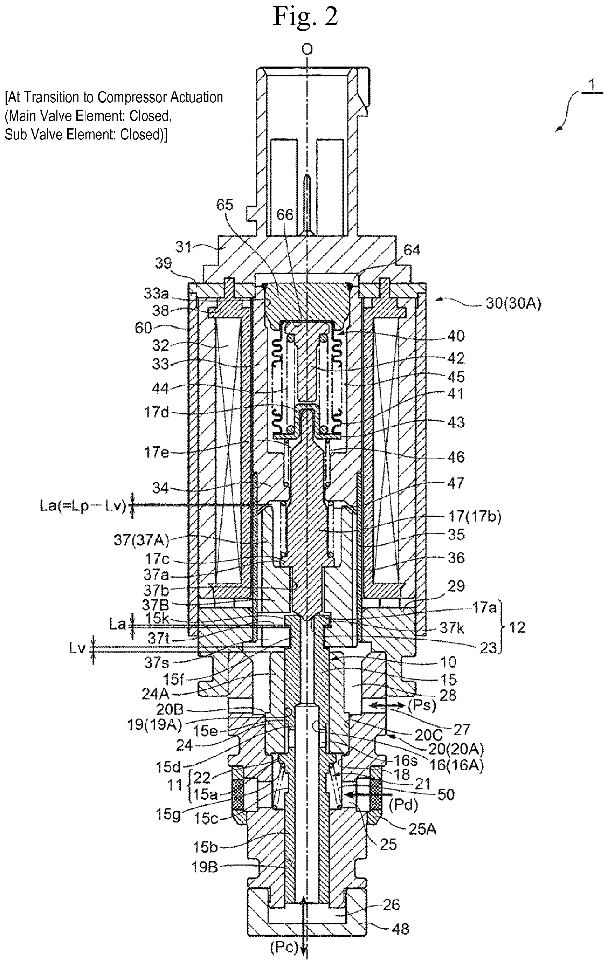

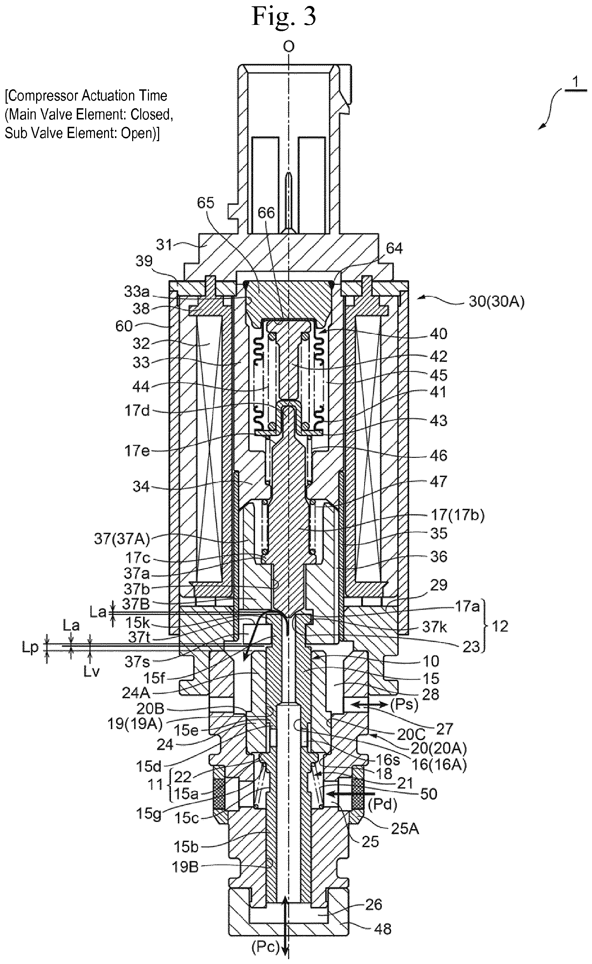

Figs. 1 to 3 are longitudinal sectional views each showing the first embodiment of the variable-capacity compressor control valve in accordance with the present invention. Specifically, Fig. 1 is a view in which the main valve element is in the open position and the sub valve element is in the closed position (i.e., at the normal control time), Fig. 2 is a view in which the main valve element is in the closed position and the sub valve element is in the closed position (i.e., at the time of transition to compressor actuation), and Fig. 3 is a view in which the main valve element is in the closed position and the sub valve element is in the open position (i.e., at the compressor actuation time).

It should be noted that in the present specification, descriptions indicating the positions or directions, such as upper, lower, top, bottom, left, right, front, and rear, are used for the sake of convenience in accordance with the drawings to avoid complexity in the description, but such descriptions do not necessarily indicate the actual positions or directions when the control valve of the present invention is incorporated into a compressor.

In addition, in each drawing, a gap formed between some members, a clearance between some members, and the like may be depicted larger or smaller than their actual dimensions to help understand the present invention and also for the sake of convenience to create the drawing.

A control valve 1 in the shown embodiment has a valve body 20 with a valve orifice 22; a valve element 10 with a main valve element 15 for opening or closing the valve orifice 22; an electromagnetic actuator 30 for moving the valve element 10 (i.e., the main valve element 15) in the direction to open or close the valve orifice (i.e., in the vertical direction); and a bellows device 40 as a pressure-sensitive reaction member.

The electromagnetic actuator 30 includes a bobbin 38, an energization coil 32 wound around the bobbin 38, a connector head 31 attached to the upper side of the bobbin 38 with an attachment plate 39 interposed therebetween, a stator 33 and an attractor 34 arranged on the inner peripheral side of the coil 32, a guide pipe 35 whose upper end portion is joined by welding to the outer periphery of the lower end portion (i.e., a step portion) of the stator 33 and the attractor 34, a plunger 37 having a recessed cross-section and arranged such that it is vertically slidable on the inner peripheral side of the guide pipe 35 below the attractor 34, a cylindrical housing 60 externally arranged around the coil 32, and a holder 29 arranged between the lower end portion of the housing 60 and the guide pipe 35 and adapted to fix them to the upper portion of the valve body 20. In this example, the attractor 34 with a recessed cross-section is integrally molded with the inner periphery of the lower portion of the cylindrical stator 33. Herein, a portion of the electromagnetic actuator 30 including the coil 32, the stator 33, the attractor 34, and the like and excluding the plunger 37 is referred to as a "solenoid portion 30A."

A closure member 65 with a short columnar shape is securely attached to the upper portion of the stator 33 by press fitting or the like, and a pressure-sensitive chamber 45, which receives a suction pressure Ps in a compressor 100, is formed between the closure member 65 on the inner peripheral side of the stator 33 and the attractor 34. The pressure-sensitive chamber 45 has arranged therein the bellows device 40 as the pressure-sensitive reaction member that includes bellows 41, a downwardly projecting upper stopper 42, an upwardly recessed lower stopper 43, and a compression coil spring 44. Further, an upper small-diameter portion 17d (i.e., an end portion on the side opposite to a sub valve element portion 17a) of a sub valve element 17 described below is fitted and inserted in the recess portion of the lower stopper 43 and thus is supported therein, and a compression coil spring 46, which is adapted to urge the bellows device 40 in the direction to contract the bellows device 40, is provided in a compressed state between the lower stopper 43 and the attractor 34.

Specifically, the electromagnetic actuator 30 includes the cylindrical stator 33, the attractor 34, and the plunger 37 arranged in series along the axial line O (i.e., in the vertical direction) on the inner peripheral side of the coil 32, and the closure member 65 with a short columnar shape, which is adapted to close an upper-portion opening 33a (i.e., an opening on the side opposite to the attractor 34) of the stator 33 (i.e., the diameter of the closure member 65 is equal to the diameter of the upper-portion opening 33a), is press-fitted into the upper-portion opening 33a and fixed therein by welding (i.e., a welded portion 64). Accordingly, the pressure-sensitive chamber 45 in which the bellows device 40 is arranged is formed between the closure member 65 and the attractor 34 on the inner peripheral side of the stator 33. The upper end portion of the bellows device 40 is fitted into and positioned in a recess portion 66 provided in the lower face (i.e., a face on the side of the pressure-sensitive chamber 45) of the closure member 65.

Herein, the diameter φA of the upper-portion opening 33a of the stator 33 (i.e., the inside diameter of a portion of the stator 33 at a predetermined distance from the upper end portion thereof and in which the closure member 65 is adapted to be inserted) is set equal to or slightly larger than the diameter φB of the pressure-sensitive chamber 45 (i.e., the inside diameter of a portion of the stator 33 that is below the upper-portion opening 33a and in which the bellows device 40 is arranged).

In order to attach the bellows device 40 to the electromagnetic actuator 30 (or the stator 33 thereof), for example, the compression coil spring 46 and the bellows device 40 may be arranged (sequentially from the bottom side) on the inner peripheral side of the stator 33 through the upper-portion opening 33a of the stator 33 that has the attractor 34 integrally molded with the lower portion thereof. Then, while the closure member 65 with the short columnar shape is press-fitted into the upper-portion opening 33a along the axial line O (that is, in the contracting and expanding direction (in particular, the contracting direction) of the bellows device 40), the bellows attachment length of the bellows device 40 that is adapted to abut the closure member 65 may be adjusted in accordance with the amount of press-fit (i.e., the amount of insertion) of the closure member 65 into the upper-portion opening 33a (at this time, the upper end portion of the bellows device 40 is fitted into the recess portion 66), and after that, the closure member 65 may be fixed in the upper-portion opening 33a by welding (for example, through welding of the entire circumference of the outer peripheral portion of the closure member 65).

The plunger 37 includes a cylindrical upper half portion 37A and a columnar lower half portion 37B, and the central portion of the columnar lower half portion 37B has formed therein an insertion through-hole 37b through which a waist portion 17b of the sub valve element 17 extending downward through the attractor 34, and an upper small-diameter portion 15f (which will be described in detail later) of the main valve element 15 pass. The outer peripheral portion of the insertion through-hole 37b in the upper face of the columnar lower half portion 37B is a latch portion 37a to which an intermediate large-diameter latch portion 17c of the sub valve element 17 is adapted to be latched.

A plunger spring (i.e., a valve-opening spring) 47, which is a cylindrical compression coil spring, adapted to urge the sub valve element 17 and the plunger 37 downward (in the direction to open the valve) is provided in a compressed state between the attractor 34 and the intermediate large-diameter latch portion 17c of the sub valve element 17 (or the plunger 37), and the plunger spring 47 presses the sub valve element 17 (or the intermediate large-diameter latch portion 17c thereof) against the plunger 37 so that the sub valve element 17 moves vertically together with the plunger 37.

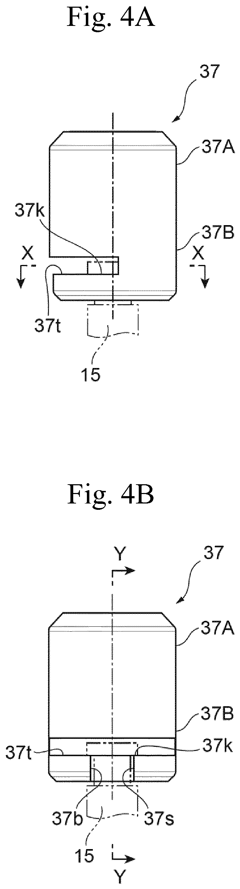

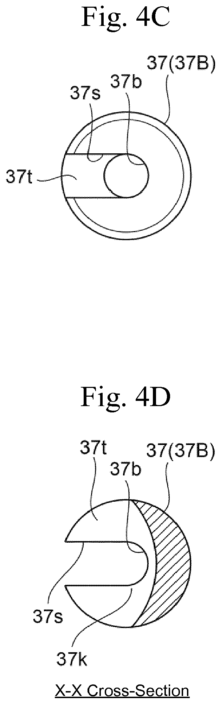

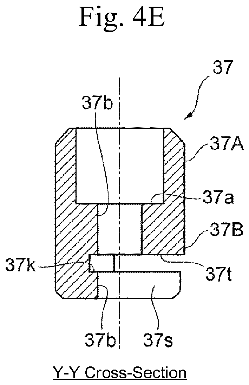

Further, as can be clearly understood from Figs. 4A to 4E, a cut-in 37t with an approximately semicircular shape in plan view is formed (in the horizontal direction) in the lower portion of the columnar lower half portion 37B (i.e., a portion at a predetermined distance from the lower end portion thereof) of the plunger 37 such that the cut-in 37t overlaps the insertion through-hole 37b, and a slit 37s, which has approximately the same width as the diameter of the insertion through-hole 37b and extends linearly from the lower end edge of the columnar lower half portion 37B to the insertion through-hole 37b, is formed below the cut-in 37t (that is, in a portion between the cut-in 37t and the lower end portion of the columnar lower half portion 37B). The height (in the vertical direction) of the cut-in 37t is set slightly greater than that of the flanged latch portion 15k of the main valve element 15, and the height (in the vertical direction) of the slit 37s is set slightly smaller than that of the upper small-diameter portion 15f of the main valve element 15 so that the main valve element 15 is movable vertically with respect to the plunger 37 (which will be described in detail later). Meanwhile, the width (in the horizontal direction) of the slit 37s is set slightly greater than the outside diameter of the upper small-diameter portion 15f of the main valve element 15 and smaller than the outside diameter of the flanged latch portion 15k of the main valve element 15, taking into consideration the assembly property and the like.

The valve element 10 has the main valve element 15 and the sub valve element 17 arranged side by side in the vertical direction (along the direction of the axial line O).

The main valve element 15 arranged on the lower side has, sequentially arranged from the bottom side, a lower fit-inserted portion 15b, a lower small-diameter portion 15c, a main valve element portion 15a, an intermediate small-diameter portion 15d, an upper fit-inserted portion 15e, the upper small-diameter portion 15f, and the flanged latch portion 15k. A stepped release through-hole 16A partially forming the in-valve release passage 16 is provided in the center of the main valve element 15 such that it penetrates through the center of the main valve element 15 in the vertical direction. The upper end portion of the release through-hole 16A is a sub valve seat portion 23 with/from which the lower end portion (i.e., the sub valve element portion) 17a of the sub valve element 17 is moved into contact or away. In addition, a plurality of horizontal holes 16s are provided in the intermediate small-diameter portion 15d of the main valve element 15.

The upper small-diameter portion 15f of the main valve element 15 is loosely fitted in the insertion through-hole 37b (i.e., a portion thereof below the cut-in 37t), and the flanged latch portion 15k of the main valve element 15 has a larger diameter than that of the insertion through-hole 37b so that when the plunger 37 is moved upward with respect to the main valve element 15, the flanged latch portion 15k is latched to the inner flanged latch portion 37k that is formed of the outer peripheral portion of the insertion through-hole 37b, and thus, latching is achieved and slippage is prevented.

The sub valve element 17 arranged above the main valve element 15 has, sequentially arranged from the bottom side, a tapered portion 17a with an inverted cone shape, which is adapted to move into contact with or away from the sub valve seat portion 23 that is the upper end edge of the release through-hole 16A, the waist portion 17b having the intermediate large-diameter latch portion 17c formed thereon, a truncated cone portion 17e, and the upper small-diameter portion 17d inserted in and supported in the recess portion of the lower stopper 43. The tapered portion 17a is the sub valve element portion adapted to open or close the in-valve release passage 16. Herein, the sub valve seat portion 23 and the sub valve element portion 17a form a sub valve unit 12. In this example, a portion of the waist portion 17b that is below the intermediate large-diameter latch portion 17c is inserted into the insertion through-hole 37b of the plunger 37 with a small gap therebetween, and a portion of the waist portion 17b that is above the intermediate large-diameter latch portion 17c and below the attractor 34 (i.e., a portion arranged on the inner side of the cylindrical upper half portion 37A) has a slightly larger diameter than those of the other portions.

The dimensions and the shape of each part around the sub valve element 17 (e.g., the gap between the waist portion 17b and the insertion through-hole 37b) are designed such that even when the sub valve element 17 is slightly tilted at a position where it has been moved upward with respect to the main valve element 15 (i.e., a position where the in-valve release passage 16 is opened), the lower end portion of the sub valve element portion (i.e., the tapered portion) 17a with the inverted cone shape enters the release through-hole 16A and the sub valve element 17 is thus aligned with the main valve element 15 by the sub valve element portion 17a as the sub valve element 17 moves closer to the main valve element 15 (that is, when the sub valve element 17 closes the in-valve release passage 16). More specifically, the dimensions and the shape of each part are designed such that a part of the sub valve element portion 17a with the inverted cone shape is located in the release through-hole 16A when the sub valve element 17 is at the highest elevated position with respect to the main valve element 15 (see FIG. 3, in particular).

In order to attach the valve element 10 (i.e., the main valve element 15 and the sub valve element 17) and the plunger 37 together, for example, the main valve element 15 may be moved horizontally with respect to the plunger 37 so that the flanged latch portion 15k and the upper small-diameter portion 15f of the main valve element 15, which has been attached to the valve body 20 (or a guide hole 19 therein) in advance, may be inserted into the cut-in 37t and the slit 37s of the plunger 37, respectively, and then, in a state in which the upper small-diameter portion 15f is fitted and inserted in the insertion through-hole 37b provided in the center of the plunger 37, the sub valve element 17 (i.e., a portion thereof below the intermediate large-diameter latch portion 17c) may be inserted into the insertion through-hole 37b from the top side.

Meanwhile, the valve body 20 has a two-split structure that includes a body member 20A having a fit recess hole 20C in the center of the upper portion thereof, and a support member 20B that is securely inserted into the recess hole 20C by press fitting or the like.

The support member 20B is produced from a material with relatively high hardness, such as stainless steel (SUS), and has a protruding stopper portion 24A for defining the lowest position of the plunger 37, on the upper side of a fit-inserted portion 24 that is fitted and inserted in the recess hole 20C. In addition, the guide hole 19 (i.e., an upper guide hole 19A) in which the upper fit-inserted portion 15e of the main valve element 15 is adapted to be slidably fitted and inserted is formed in the center of the support member 20B such that it penetrates through the center of the support member 20B in the vertical direction, and the lower end portion of the upper guide hole 19A is the valve orifice 22 (i.e., the valve seat portion) that is opened or closed by the main valve element portion 15a of the main valve element 15. Herein, the main valve element portion 15a and the valve orifice 22 form a main valve unit 11. Since the support member 20B is produced from a material with high hardness, such as stainless steel, as described above, the specific gravity thereof is also high.

The body member 20A is produced from a material, such as aluminum, brass, or resin, that has relatively low specific gravity (i.e., a material with relatively low hardness) as compared to stainless steel and the like. An inlet/outlet chamber 28 for the suction pressure Ps in the compressor 100 is formed around the outer periphery of the stopper portion 24A and a plurality of Ps inlet/outlet ports 27 are formed on the outer peripheral side of the inlet/outlet chamber 28 in a state in which the support member 20B (or the fit-inserted portion 24 thereof) is inserted in the recess hole 20C of the body member 20A. The suction pressure Ps introduced into the inlet/outlet chamber 28 through the Ps inlet/outlet ports 27 is introduced into the pressure-sensitive chamber 45 via the slit 37s and the cut-in 37t formed at the bottom of the plunger 37, a gap formed between the waist portion 17b of the sub valve element 17 and the insertion through-hole 37b of the plunger 37, a gap 36 formed between the outer periphery of the plunger 37 and the guide pipe 35, and the like.

In addition, a housing hole 18, which has a larger diameter than those of the guide hole 19 and the main valve element portion 15a and a smaller diameter than that of the recess hole 20C and is adapted to house the main valve element portion 15a of the main valve element 15, is provided continuously with the center of the bottom of the recess hole 20C of the body member 20A, and the guide hole 19 (i.e., a lower guide hole 19B) in which the lower fit-inserted portion 15b of the main valve element 15 is adapted to be slidably fitted and inserted is formed in the center of the lower portion of the housing hole 18. A valve-closing spring 50, which is a conical compression coil spring, is provided in a compressed state between a corner portion on the outer periphery of the bottom of the housing hole 18 and a step portion (i.e., a terrace portion) 15g provided on the outer periphery of the lower portion of the main valve element portion 15a of the main valve element 15. Thus, with the urging force of the valve-closing spring 50, the main valve element 15 (or a step portion between the upper fit-inserted portion 15e and the upper small-diameter portion 15f thereof) is pressed against the plunger 37.

The inside of the housing hole 18 (i.e., a portion below the valve orifice 22 of the support member 20B) is the valve chamber 21. A plurality of Pd introduction ports 25 communicating with a discharge chamber 106 of the compressor 100 are provided in the valve chamber 21. A ring-like filter member 25A is arranged on the outer periphery of the Pd introduction ports 25 of the body member 20A.

In addition, the lower end portion of the body member 20A has a lid-like member 48, which functions as a filter, fixed thereto by engagement, press fitting, or the like. A Pc inlet/outlet chamber (or inlet/outlet port) 26, which communicates with a crank chamber 104 of the compressor 100, is provided above the lid-like member 48 and below the main valve element 15. The Pc inlet/outlet chamber (or inlet/outlet port) 26 communicates with the Pd introduction ports 25 via the release through-hole 16A → the horizontal holes 16s → the gap between the lower portion of the upper guide hole 19A and the intermediate small-diameter portion 15d → the gap between the valve orifice 22 and the main valve element portion 15a → the valve chamber 21.

In addition, in this embodiment, the release through-hole 16A formed in the main valve element 15, the cut-in 37t and the slit 37s provided in the plunger 37, the inlet/outlet chamber 28, and the like form the in-valve release passage 16 for releasing the pressure Pc in the crank chamber 104 to a suction chamber 107 of the compressor 100 via the Ps inlet/outlet ports 27. The in-valve release passage 16 is adapted to be opened or closed as the sub valve element portion 17a of the sub valve element 17 is moved into contact with or away from the sub valve seat portion 23 that is the upper end edge of the release through-hole 16A of the main valve element 15.

Herein, in the control valve 1 of this embodiment, when the plunger 37, the main valve element 15, and the sub valve element 17 are at the lowest position (i.e., when the bottom end face of the plunger 37 abuts the stopper portion 24A, the main valve unit 11 is in the fully open position, and the sub valve unit 12 is in the fully closed position) as shown in Fig. 1, a clearance in the vertical direction between the main valve element portion 15a of the main valve element 15 and the valve orifice 22 (i.e., the valve seat portion) is represented by a first lift amount Lv, and a clearance between the inner flanged latch portion 37k of the plunger 37 and the flanged latch portion 15k of the main valve element 15 is represented by a predetermined amount La. The maximum lift amount (i.e., a second lift amount) Lp of the plunger 37 (i.e., the lift amount of from the lowest position to the highest position of the plunger 37) corresponds to the first lift amount Lv + the predetermined amount La.

Next, the operation of the control valve 1 with the aforementioned configuration will be schematically described.

At the normal control time (i.e., Pd → Pc control time), the lift amount of the plunger 37 is slightly greater than the first lift amount Lv at the maximum, and at the compressor actuation time (i.e., Pc → Ps control time), the lift amount of the plunger 37 is the second lift amount Lp.

That is, at the normal control time (i.e., Pd → Pc control time), when the solenoid portion 30A including the coil 32, the stator 33, the attractor 34, and the like is supplied with current and thus is energized, the plunger 37 is attracted by the attractor 34, and along with this, the intermediate large-diameter latch portion 17c of the sub valve element 17 is latched to the latch portion 37a of the plunger 37. Therefore, the sub valve element 17 moves upward together with the plunger 37, and following the movement of the sub valve element 17 and the plunger 37, the main valve element 15 is moved upward (i.e., in the direction to close the valve) by the urging force of the valve-closing spring 50. Meanwhile, the suction pressure Ps introduced from the compressor 100 through the Ps inlet/outlet ports 27 is introduced into the pressure-sensitive chamber 45 through the inlet/outlet chamber 28 via the slit 37s and the cut-in 37t of the plunger 37 and the like, and the bellows device 40 (i.e., the inside thereof is at a vacuum pressure) is expansively or contractively displaced in accordance with the pressure (i.e., the suction pressure Ps) in the pressure-sensitive chamber 45 (i.e., contracts if the suction pressure Ps is high, and expands if it is low), and the displacement is then transmitted to the main valve element 15 via the plunger 37 and the sub valve element 17, whereby the valve opening (i.e., the clearance between the valve orifice 22 and the main valve element portion 15a) is regulated, and the pressure Pc in the crank chamber 104 is controlled in accordance with the valve opening. Along with this, the inclination angle of the swash plate 102 and the stroke of the piston 105 in the compressor 100 are controlled so as to increase or decrease the discharge capacity.

In this case, the main valve element 15 is always urged upward by the urging force of the valve-closing spring 50, while the sub valve element 17 is always urged downward by the urging force of the valve-opening spring 47. Therefore, the sub valve element portion 17a is in a state of being pressed against the sub valve seat portion 23 (i.e., the sub valve unit 12 is closed), and the in-valve release passage 16 is blocked in the main valve element 15. Therefore, there is no possibility that the crank chamber pressure Pc may be released to the suction chamber 107 via the in-valve release passage 16.

In contrast, at the compressor actuation time, the solenoid portion 30A is supplied with current and thus is energized, and the plunger 37 is attracted by the attractor 34. Thus, the sub valve element 17 moves upward together with the plunger 37, and following the upward movement of the sub valve element 17 and the plunger 37, the main valve element 15 is moved upward, and the valve orifice 22 is closed by the main valve element portion 15a of the main valve element 15. Then, the plunger 37 is further moved upward, whereby the sub valve element 17 opens the in-valve release passage 16, and thus, the pressure Pc in the crank chamber 104 is released into the suction chamber 107 via two passages that are an in-compressor release passage 108 and the in-valve release passage 16.

Specifically, until the upward movement amount of the plunger 37 reaches the first lift amount Lv, the main valve element 15 is moved in the direction to close the valve by the urging force of the valve-closing spring 50 such that it follows the upward movement of the plunger 37 and the sub valve element 17. Then, when the upward movement amount reaches the first lift amount Lv, the valve orifice 22 is closed by the main valve element portion 15a of the main valve element 15 (i.e., the state shown in Fig. 2), and the plunger 37 is further moved upward by the predetermined amount La with the main valve unit 11 in the closed valve state (i.e., the state shown in Fig. 3). In other words, after the upward movement amount of the plunger 37 has reached the first lift amount Lv, the sub valve element 17 is lifted by the predetermined amount La until the inner flanged latch portion 37k of the plunger 37 is latched to the flanged latch portion 15k of the main valve element 15 (i.e., the first lift amount Lv + the predetermined amount La = the second lift amount Lp). In such a case, since the main valve element 15 remains still in the closed valve state, the sub valve element portion 17a of the sub valve element 17 is lifted from the sub valve seat portion 23 by the predetermined amount La, whereby the in-valve release passage 16 is opened. When the inner flanged latch portion 37k of the plunger 37 is latched to the flanged latch portion 15k of the main valve element 15, neither the plunger 37 nor the sub valve element 17 is lifted any further even if the solenoid portion 30A generates an attraction force.

As described above, in the control valve 1 of this embodiment, since the closure member 65, which is adapted to close the upper-portion opening 33a of the cylindrical stator 33 on the side opposite to the attractor 32, is press-fitted into the upper-portion opening 33a and welded therein, the bellows attachment length of the bellows device 40 (i.e., the pressure-sensitive reaction member) 40 can be adjusted in accordance with the amount of press-fit (i.e., the amount of insertion) of the closure member 65 into the upper-portion opening 33a. In addition, as the closure member 65 is welded in the upper-portion opening 33a, the closure member 65 can be fixed in the upper-portion opening 33a airtightly. Therefore, the component machining steps, the machining cost, the number of components, and the number of assembly steps as well as the sizes of the components can be reduced, and also, the bellows attachment length of the bellows device (i.e., the pressure-sensitive reaction member) 40 can be adjusted and airtightness can be secured.

### <Second Embodiment>

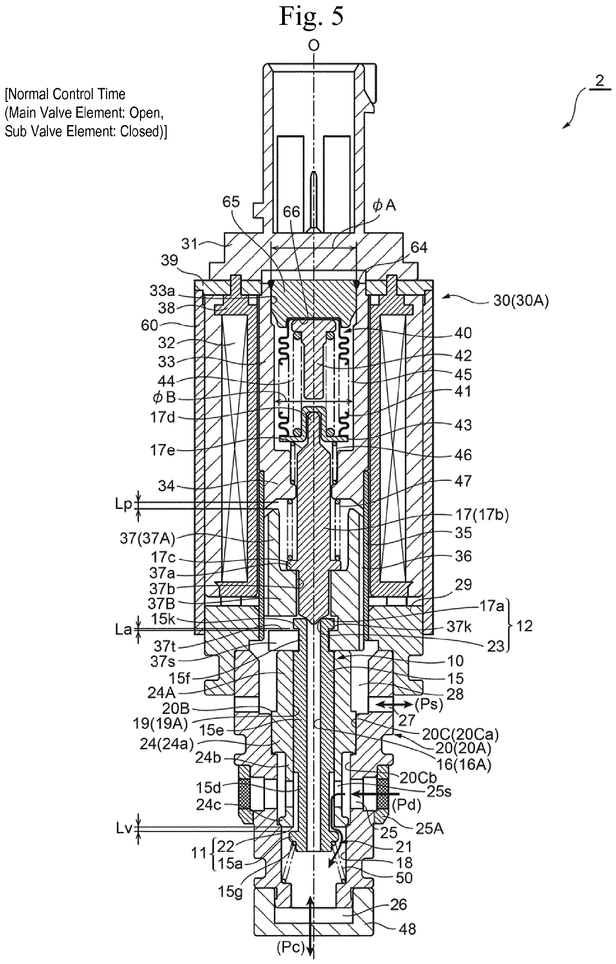

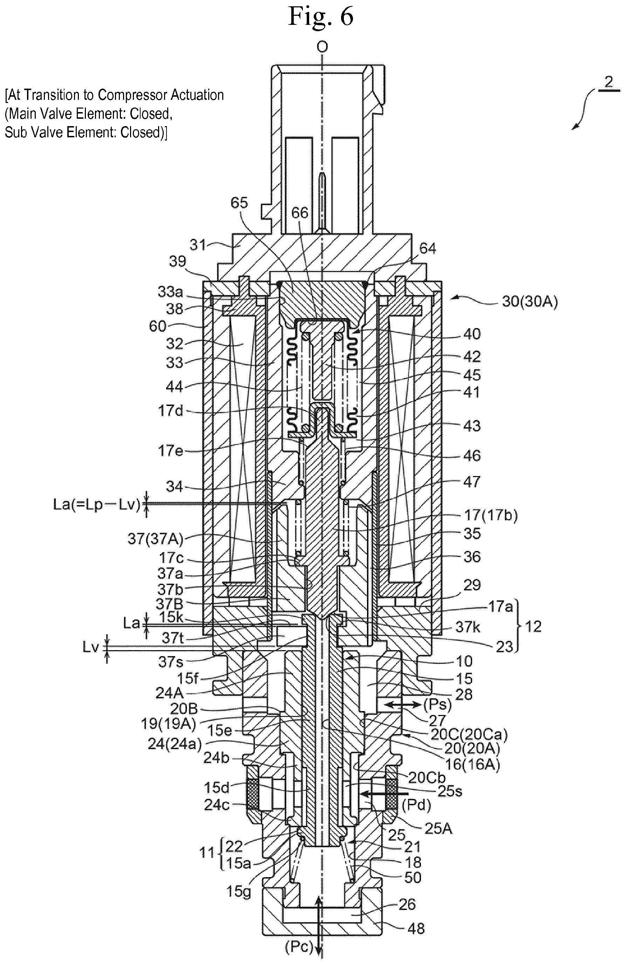

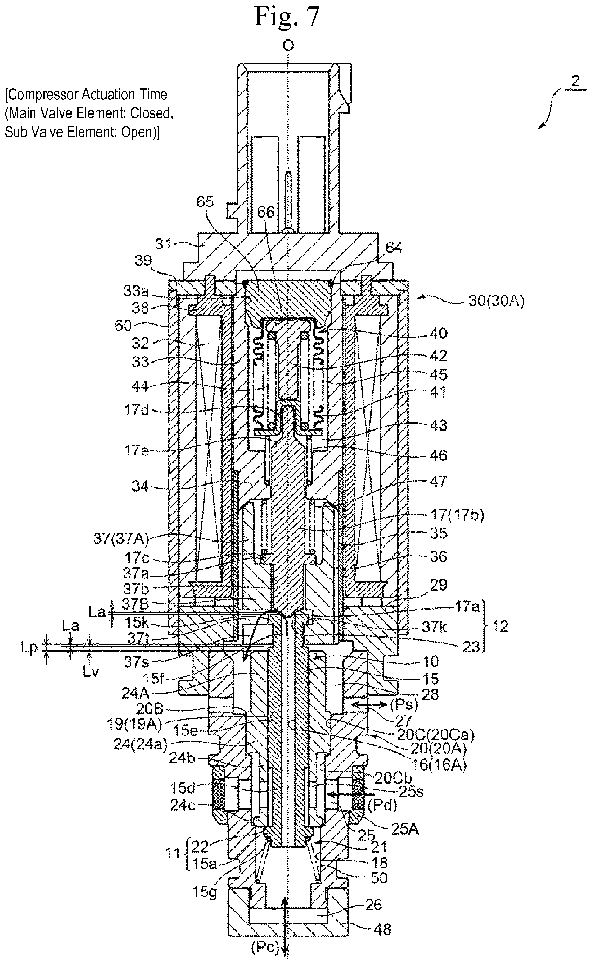

Figs. 5 to 7 are longitudinal sectional views each showing the second embodiment of the variable-capacity compressor control valve in accordance with the present invention. Specifically, Fig. 5 is a view in which the main valve element is in the open position and the sub valve element is in the closed position (at the normal control time), Fig. 6 is a view in which the main valve element is in the closed position and the sub valve element is in the closed position (at the time of transition to compressor actuation), and Fig. 7 is a view in which the main valve element is in the closed position and the sub valve element is in the open position (at the compressor actuation time).

The control valve 2 of the second embodiment basically differs from the control valve 1 of the aforementioned first embodiment only in the configurations of the valve body and the main valve element of the valve element. Thus, configurations with the same functions as those of the first embodiment are denoted by the same reference numerals and the detailed description thereof will be omitted. Hereinafter, only the differences will be discussed in detail.

In the control valve 2 of this embodiment, the upper fit-inserted portion 15e and the intermediate small-diameter portion 15d of the main valve element 15 are formed longer than those of the control valve 1 of the aforementioned first embodiment, and the lower small-diameter portion 15c and the lower fit-inserted portion 15b below the main valve element portion 15a are omitted.

In addition, the fit-inserted portion 24 of the support member 20B of the valve body 20 has a step formed thereon, and at a position below an upper large-diameter portion 24a (i.e., an outer shape corresponding to the fit-inserted portion 24 of the first embodiment), a lower small-diameter portion 24b, which is longer than the upper large-diameter portion 24a in the vertical direction, is provided, and at the lower end of the lower small-diameter portion 24b, a flanged abutment portion 24c, which is adapted to abut a step portion (i.e., a terrace portion) between the recess hole 20C and the housing hole 18 of the body member 20A, is provided such that it protrudes outward.

Meanwhile, the recess hole 20C of the body member 20A of the valve body 20 also has a step formed thereon, and has an upper large-diameter hole 20Ca (i.e., an outer shape corresponding to the recess hole 20C of the first embodiment) in which the upper large-diameter portion 24a is fitted and inserted, and a lower small-diameter hole 20Cb in which the lower small-diameter portion 24b is fitted and inserted, and further has a stepped housing hole 18 for housing the main valve element portion 15a of the main valve element 15 in a manner continuous with the center of the bottom of the lower small-diameter hole 20Cb. A valve-closing spring 50, which is a conical compression coil spring, is provided in a compressed state between the stepped portion provided on the inner periphery of the housing hole 18 and the stepped portion (i.e., the terrace portion) 15g provided on the outer periphery of the lower portion of the main valve element portion 15a of the main valve element 15.

The inside of the housing hole 18 (i.e., a portion below the valve orifice 22 of the support member 20B) is the valve chamber 21. Herein, the lower small-diameter hole 20Cb in the recess hole 20C has a plurality of Pd introduction ports 25 communicating with the discharge chamber 106 of the compressor 100. A ring-like filter member 25A is arranged on the outer periphery of the Pd introduction ports 25, and the lower small-diameter portion 24b of the fit-inserted portion 24 (instead of the intermediate small-diameter portion 15d of the main valve element 15) has a plurality of horizontal holes 25a communicating with the Pd introduction ports 25. The Pc inlet/outlet chamber (or inlet/outlet port) 26, which communicates with the crank chamber 104 of the compressor 100, communicates with the Pd introduction ports 25 via the valve chamber 21 → the gap between the valve orifice 22 and the main valve element portion 15a → the gap between the lower portion of the guide hole 19 (i.e., the upper guide hole 19A) and the intermediate small-diameter portion 15d → the horizontal holes 25 in the lower small-diameter portion 24b → the gap between the lower small-diameter portion 24b and the lower small-diameter hole 20Cb (which will be described in detail below).

In addition, in this embodiment, the outer periphery of the upper large-diameter portion 24a abuts the inner periphery of the upper large-diameter hole 20Ca (that is, the upper large-diameter portion 24a is fitted into (fits snugly inside) the upper large-diameter hole 20Ca), and the support member 20B is securely inserted in the recess hole 20C of the body member 20A in a posture in which a small gap is provided between the outer periphery of the lower small-diameter portion 24b and the inner periphery of the lower small-diameter hole 20Cb.

Needless to say, the control valve 2 of the second embodiment with such a configuration can also obtain the same operational advantages as those of the control valve 1 of the aforementioned first embodiment.

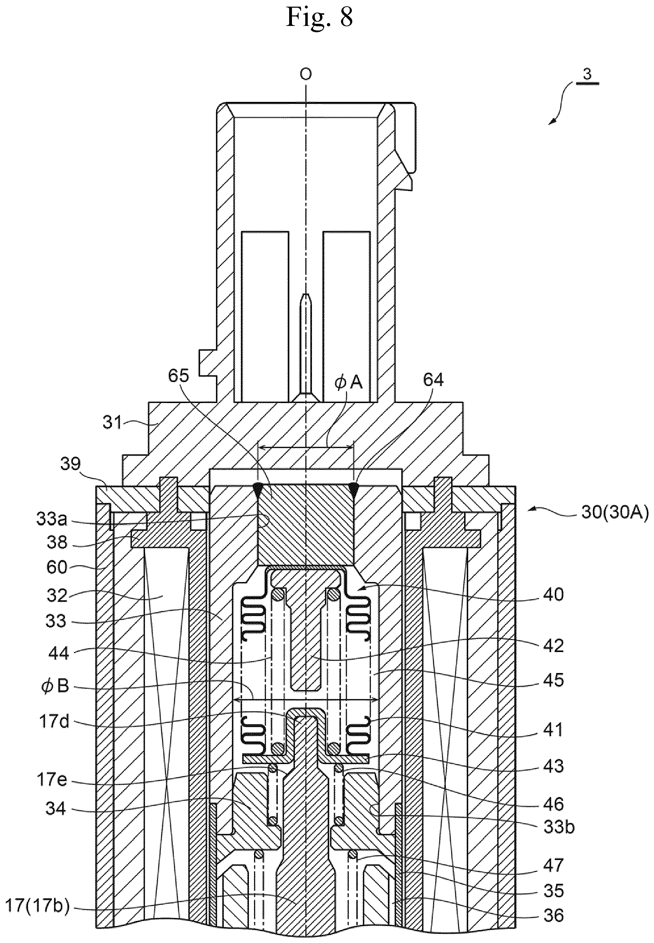

It should be noted that in the aforementioned first and second embodiments, in order to simplify the assembly steps, the diameter φA of the upper-portion opening 33a of the stator 33 of the electromagnetic actuator 30 is set equal to or greater than the diameter φB of the pressure-sensitive chamber 45, and the bellows device 40 and the like are inserted into the inner peripheral side of the stator 33 through the upper-portion opening 33a of the stator 33. However, as shown in a control valve 3 in Fig. 8, for example, when the diameter φA of the upper-portion opening 33a of the stator 33 is smaller than the diameter φB of the pressure-sensitive chamber 45, the bellows device 40 and the like may be inserted into the inner peripheral side of the stator 33 through a lower-portion opening 33b of the stator 33 (which is produced as a separate component from the attractor 34 herein).

More specifically, for example, the bellows device 40 and the compression coil spring 46 may be arranged (sequentially from the top side) on the inner peripheral side of the stator 33 through the lower-portion opening 33b (i.e., the opening on the attractor 34 side) of the stator 33, and the attractor 34 may be attached to and fixed in the lower-portion opening 33b. Then, while the closure member 65 with the short columnar shape is press-fitted into the upper-portion opening 33a (i.e., the opening on the side opposite to the attractor 34) of the stator 33 along the axial line O (that is, in the contracting and expanding direction (in particular, the contracting direction) of the bellows device 40), the bellows attachment length of the bellows device 40 that is adapted to abut the closure member 65 may be adjusted in accordance with the amount of press-fit (i.e., the amount of insertion) of the closure member 65 into the upper-portion opening 33a (at this time, the upper end portion of the bellows device 40 is fitted into the recess portion 66), and after that, the closure member 65 may be fixed in the upper-portion opening 33a by welding (for example, through welding of the entire circumference of the outer peripheral portion of the closure member 65).

### Reference Signs List

- 1: Variable-capacity compressor control valve (First Embodiment)
- 2: Variable-capacity compressor control valve (Second Embodiment)
- 10: Valve element
- 11: Main valve unit
- 12: Sub valve unit
- 15: Main valve element
- 15a: Main valve element portion
- 15k: Flanged latch portion
- 16: In-valve release passage
- 17: Sub valve element
- 17a: Sub valve element portion (tapered portion)
- 19: Guide hole
- 19A: Upper guide hole
- 19B: Lower guide hole
- 20: Valve body
- 20A: Body member
- 20B: Support member
- 20C: Recess hole
- 21: Valve chamber
- 22: Valve orifice
- 23: Sub valve seat portion
- 25: Pd introduction port
- 26: Pc inlet/outlet port
- 27: Ps inlet/outlet port
- 30: Electromagnetic actuator
- 30A: Solenoid portion
- 32: Coil
- 33: Stator
- 33a: Upper-portion opening
- 33b: Lower-portion opening
- 34: Attractor
- 37: Plunger
- 37k: Inner flanged latch portion
- 37s: Slit
- 37t: Cut-in
- 40: Bellows device (pressure-sensitive reaction member)
- 45: Pressure-sensitive chamber
- 50: Valve-closing spring
- 64: Welded portion
- 65: Closure member
- 66: Recess portion
- Lv: First lift amount
- La: Predetermined amount
- Lp: Second lift amount

## Claims

1. A variable-capacity compressor control valve comprising:
a valve body including a valve chamber with a valve orifice, a Ps inlet/outlet port communicating with a suction chamber of a compressor, a Pd introduction port arranged upstream of the valve orifice and communicating with a discharge chamber of the compressor, and a Pc inlet/outlet port arranged downstream of the valve orifice and communicating with a crank chamber of the compressor;
a valve element adapted to open or close the valve orifice;
an electromagnetic actuator including a plunger and adapted to move the valve element in a direction to open or close the valve orifice;
a pressure-sensitive chamber adapted to receive a suction pressure Ps from the compressor via the Ps inlet/outlet port; and
a pressure-sensitive reaction member arranged in the pressure-sensitive chamber and adapted to urge the valve element in the direction to open or close the valve orifice in accordance with a pressure in the pressure-sensitive chamber,
wherein:
the electromagnetic actuator includes a cylindrical stator, an attractor, and the plunger arranged in series on an inner peripheral side of a coil, and
a closure member adapted to close an opening of the stator on a side opposite to the attractor is press-fitted into the opening and welded therein so as to form the pressure-sensitive chamber on an inner peripheral side of the stator.

2. The variable-capacity compressor control valve according to claim 1, wherein the closure member is press-fitted into the opening in a contracting and expanding direction of the pressure-sensitive reaction member.

3. The variable-capacity compressor control valve according to claim 1 or 2, wherein the stator and the attractor are integrally molded.

4. The variable-capacity compressor control valve according to any one of claims 1 to 3, wherein a diameter of the opening is equal to or greater than that of the pressure-sensitive chamber.

5. The variable-capacity compressor control valve according to any one of claims 1 to 4, wherein the closure member has a recess portion in which an end portion of the pressure-sensitive reaction member arranged in the pressure-sensitive chamber is fitted.

6. The variable-capacity compressor control valve according to any one of claims 1 to 5, wherein the valve element includes a main valve element and a sub valve element, the main valve element being adapted to open or close the valve orifice and including an in-valve release passage for releasing a pressure Pc in the crank chamber to the suction chamber of the compressor via the Ps inlet/outlet port, and the sub valve element being adapted to open or close the in-valve release passage.

7. A method for assembling a variable-capacity compressor control valve, the variable-capacity compressor control valve including
a valve body including a valve chamber with a valve orifice, a Ps inlet/outlet port communicating with a suction chamber of a compressor, a Pd introduction port arranged upstream of the valve orifice and communicating with a discharge chamber of the compressor, and a Pc inlet/outlet port arranged downstream of the valve orifice and communicating with a crank chamber of the compressor;
a valve element adapted to open or close the valve orifice;
an electromagnetic actuator including a plunger and adapted to move the valve element in a direction to open or close the valve orifice;
a pressure-sensitive chamber adapted to receive a suction pressure Ps from the compressor via the Ps inlet/outlet port; and
a pressure-sensitive reaction member arranged in the pressure-sensitive chamber and adapted to urge the valve element in the direction to open or close the valve orifice in accordance with a pressure in the pressure-sensitive chamber,
wherein:
the electromagnetic actuator includes a cylindrical stator, an attractor, and the plunger arranged in series on an inner peripheral side of a coil, and
the pressure-sensitive chamber in which the pressure-sensitive reaction member is arranged is formed on an inner peripheral side of the stator, the method comprising:
arranging the pressure-sensitive reaction member on the inner peripheral side of the stator through an opening of the stator on a side opposite to the attractor;
adjusting an attachment length of the pressure-sensitive reaction member while press-fitting a closure member adapted to close the opening into the opening; and
welding the closure member in the opening and thus fixing the closure member.

8. A method for assembling a variable-capacity compressor control valve, the variable-capacity compressor control valve including
a valve body including a valve chamber with a valve orifice, a Ps inlet/outlet port communicating with a suction chamber of a compressor, a Pd introduction port arranged upstream of the valve orifice and communicating with a discharge chamber of the compressor, and a Pc inlet/outlet port arranged downstream of the valve orifice and communicating with a crank chamber of the compressor;
a valve element adapted to open or close the valve orifice;
an electromagnetic actuator including a plunger and adapted to move the valve element in a direction to open or close the valve orifice;
a pressure-sensitive chamber adapted to receive a suction pressure Ps from the compressor via the Ps inlet/outlet port; and
a pressure-sensitive reaction member arranged in the pressure-sensitive chamber and adapted to urge the valve element in the direction to open or close the valve orifice in accordance with a pressure in the pressure-sensitive chamber,
wherein:
the electromagnetic actuator includes a cylindrical stator, an attractor, and the plunger arranged in series on an inner peripheral side of a coil, and
the pressure-sensitive chamber in which the pressure-sensitive reaction member is arranged is formed on an inner peripheral side of the stator, the method comprising:
arranging the pressure-sensitive reaction member on the inner peripheral side of the stator through a lower-portion opening of the stator on a side of the attractor;
securely fixing the attractor in the lower-portion opening;
adjusting an attachment length of the pressure-sensitive reaction member while press-fitting a closure member adapted to close an upper-portion opening of the stator on a side opposite to the attractor into the upper-portion opening; and
welding the closure member in the upper-portion opening and thus fixing the closure member.
